# EUROPÄISCHE PATENTSCHRIFT

(11) **EP 0 813 714 B1**
(45) Veröffentlichungstag und Bekanntmachung des Hinweises auf die Patenterteilung: **11.11.1998**
(21) Anmeldenummer: 96905692.8
(22) Anmeldetag: 07.03.1996
(51) Int. Cl.: G06F 12/14

(54) **MEHRBENUTZERDATENVERARBEITUNGSANLAGE MIT SPEICHERSCHUTZ**
MULTI-USER DATA PROCESSING SYSTEM WITH STORAGE PROTECTION
SYSTEME MULTI-UTILISATEUR DE TRAITEMENT DE DONNEES AVEC PROTECTION DE MEMOIRE

(30) Priorität: 10.03.1995 DE 19508723
(43) Veröffentlichungstag der Anmeldung: 29.12.1997
(73) Patentinhaber: SIEMENS AKTIENGESELLSCHAFT, 80333 München (DE)
(72) Erfinder: WEINLÄNDER, Markus, D-91230 Happurg (DE)
(86) Internationale Anmeldenummer: DE9600407
(87) Internationale Veröffentlichungsnummer: WO9628782

(56) Entgegenhaltungen:
- EP-A- 0 449 255
- DE-A- 4 115 152

## Beschreibung

Eine Datenverarbeitungsanlage weist in aller Regel als die wesentlichsten Betriebsmittel einen Prozessor und einen Speicher auf. Im Speicher werden zum einen die vom Prozessor zu bearbeitenden Befehlsanweisungen hinterlegt, zum anderen kann der Prozessor Bearbeitungsergebnisse in den Speicher zurückschreiben. Üblicherweise ist der insgesamt zur Verfügung stehende, d.h. vom Prozessor adressierbare Speicher in zumindest zwei einzelne Bereiche unterteilt. In den ersten Bereich, welcher im folgenden Betriebssystemspeicherbereich genannt wird, wird bei der Herstellung der Datenverarbeitungsanlage eine sogenannte Betriebssystemcodierung eingebracht, womit insbesondere die Hardwarekomponenten der Anlage verwaltet werden. In den zweiten Bereich, welcher im folgenden Anwenderspeicherbereich genannt wird, können von Benutzern der Datenverarbeitungsanlage selbst erstellte Programme und Daten hinterlegt werden.

Aus der Sicht des Prozessors einer Datenverarbeitungsanlage erfolgt an sich keine Unterscheidung zwischen diesen beiden Speicherbereichen. Insbesondere spielt es keine Rolle, ob der gesamte Adreßraum des Mikroprozessors, wie dies bei mobilen Datenverarbeitungsanlagen wie z.B. Prozessor-Chipkarten der Fall ist, physikalisch in einen unveranderlichen Speicher (z.B. ROM) für das Betriebssystem und einen nichtflüchtigen Anwendungsspeicher (z.B. EEPROM) geteilt ist. Der Prozessor greift unter Ausnutzung des gesamten Adreßraumes bei Bedarf auf jedes beliebige Speicherelement unabhängig davon zu, ob dieses sich im Betriebssystemspeicherbereich oder im Anwenderspeicherbereich befindet. Dies hat jedoch zur Folge, daß mittels eines individuellen Programmcodes, d.h. Anwenderbefehlsanweisungen, welche von einem Benutzer in einem für ihn reservierten Anwenderspeicherbereich der mobilen Datenverarbeitungsanlage hinterlegt wurden, in beabsichtigter oder zufälliger Weise ungehindert lesend und/oder verändernd sowohl auf den Betriebssystemspeicherbereich, als auch auf die anderen Benutzern zugeteilten Anwenderspeicherbereiche und den dort installierten Anwenderprogrammen bzw. Anwenderdaten zugegriffen werden kann.

Im EP 05 61 509 A1 ist ein vernetztes Computersystem mit einer Vielzahl von Benutzerterminals sowie Ein- und Ausgabeschnittstellen dargestellt. Das Computersystem wird von einem Betriebssystem, wie beispielsweise einem UNIX Betriebssystembefehlssatz betrieben. In dem Computersystem können für Benutzer bestimmte Betriebssystembefehle oder Ein- und Ausgabeschnittstellen allgemein gesperrt werden. Überwacht vom Betriebssystem können diese durch einen zusätzlichen Betriebssystembefehl von einem Benutzer des Computersystems indirekt aufgerufen oder aktiviert werden, wenn dieser eine in einem Speicher hinterlegte Zugriffsberechtigung hat.

Im DE 41 15 152 A1 ist eine datenschützende Mikroprozessorschaltung für tragbare Datenträger offenbart. Diese enthält eine von der eigentlichen Mikroprozessorschaltung entkoppelte, zusätzliche Schutzschaltung, welche sicherstellt, daß seitens eines Fremdprogramms nur auf solche Speicherbereiche zugegriffen werden kann, die für einen Zugriff zugelassen sind. Dabei enthält die zusätzliche Schutzschaltung bei einer ersten Ausführungsform einen ersten Komparator mit Hilfsregister und einen zweiten Komparator mit Hilfsregister. Die benutzerabhängigen Grenzwerte für Zugriffe auf Speicherbereiche sind entweder in fest verdrahteter Logik oder in sicheren Speichern abgelegt und werden durch die eigentliche Mikroprozessorschaltung in die Hilfsregister geladen. Diese werden durch die Komparatoren mit dem Adreßregister und dem Programmzähler der eigentlichen Mikroprozessorschaltung verglichen. Die Ausgangswerte der Komparatoren werden durch ein UND-Gatter logisch miteinander verknüpft und zur Steuerschaltung der eigentlichen Mikroprozessorschaltung geführt. In einer zweiten Hardwarevariante enthält die zusätzliche Schutzschaltung einen eigenen Sicherungsprozessor mit Frequenztaktteilerschaltung und eigener Speicheranordnung. In dieser sind die benutzerabhängigen Grenzwerte für Zugriffe auf Speicherbereiche gespeichert und werden durch den Sicherungsprozessor mit dem Adreßregister und dem Programmzähler der eigentlichen Mikroprozessorschaltung verglichen.

Der Erfindung liegt nun die Aufgabe zugrunde, für eine portable Chipkarte einen Speicherzugriffsschutz anzugeben, welcher möglichst ohne Eingriffe in die Hardwarestrukturen der Chipkarte auskommt.

Die Aufgabe wird dadurch gelöst, daß zunächst der Prozessor bezüglich des internen Mikrocodes so angepaßt ist, daß die Ausführung von in einem Anwenderspeicherbereich geladenen Standardbefehlen des Prozessors gesperrt ist, welche einen lesenden oder beschreibenden Zugriff auf den Inhalt von Speicherzellen anfordern. Im Betriebssystemspeicherbereich ist ferner eine Speicherbereichs- Zugriffstabelle vorhanden, in welcher pro Anwenderspeicherbereich der zugelassene Adreßraum für die im jeweiligen Anwenderspeicherbereich geladenen Befehle hinterlegt ist. Schließlich ist in dem Betriebssystem des Prozessors eine zusätzliche Programmroutine vorhanden, welche von einem in einem Anwenderspeicherbereich geladenen, einen lesenden oder beschreibenden Zugriff auf eine Speicherzelle anfordernden Befehl aufgerufen wird, und mittels der Speicherbereichs-Zugriffstabelle vor Befehlsausführung überprüft, ob der vom jeweiligen Befehl angeforderte Zugriff auf eine Speicherzelle im zugelassenen Adreßraum liegt, bzw. andernfalls die Ausführung des Befehls sperrt.

Die Erfindung hat den Vorteil, daß der "Aktionsradius" eines oder mehrerer im Anwenderprogrammspeicherbereich enthaltener Anwendungsprogramme in einfacher Weise allein mit programmtechnischen Mitteln auf einen bestimmten Bereich des Speichers der Datenverarbeitungsanlage eingeschränkt werden kann, ohne daß zusätzliche Hardwarekomponenten benötigt werden. Der für schreibende und lesende Zugriffe von Befehlen eines Anwenderprogramms freigegebene Adreßraum des Speichers kann anwenderabhängig in der Speicherbereichs-Zugriffstabelle hinterlegt werden. In der Regel wird der zugelassene Adreßraum mit dem einem Anwender zur Verfügung gestellten und einen individuellen Anwenderprogrammcode enthaltenden Anwenderspeicherbereich übereinstimmen. Es ist somit einem Anwender verwehrt, mit Hilfe seines Anwenderprogrammcodes schreibende und lesende Zugriffe aus dem ihm zugewiesenen Anwenderprogrammspeicherbereich heraus auf Speicherzellen auszuführen, welche entweder in dem einem anderen Anwender zugewiesenen Anwenderspeicherbereich oder in dem Betriebssystemspeicherbereich liegen.

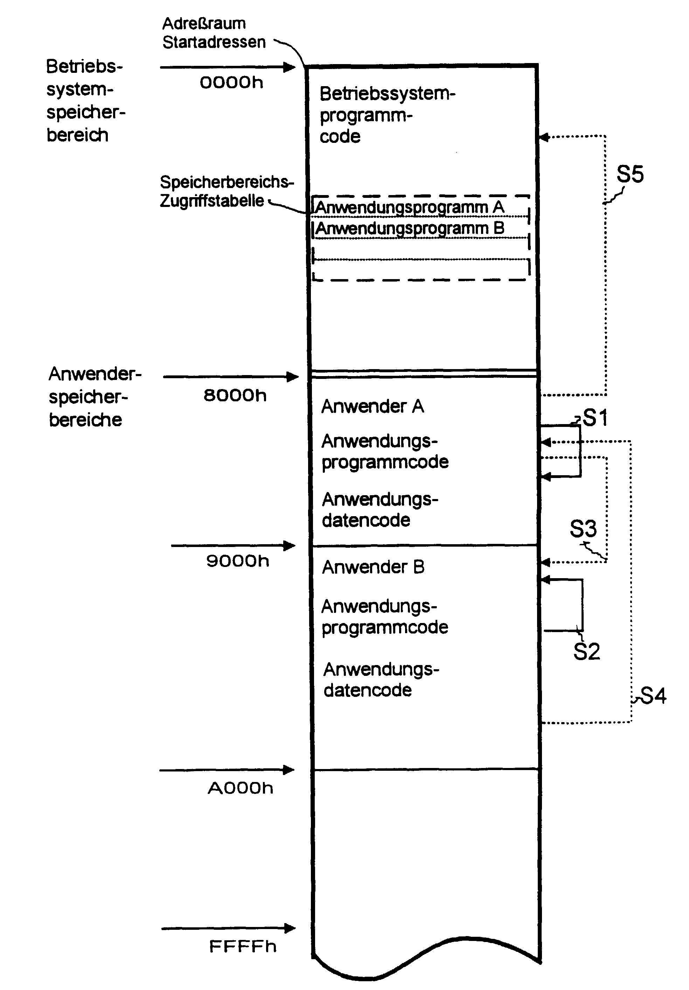

Die Erfindung wird mit einem in der Figur dargestellten Beispiel weiter erläutert. Dieses zeigt eine typische Aufteilung des Speichers einer Datenverarbeitungsanlage, auch Speicherlayout genannt. Dabei ist der Speicher im wesentlichen in zwei Teile gegliedert. Ein oberer, sogenannter Betriebsystemspeicherbereich, dessen Adreßraum bei der Startadresse 0000h beginnt ( h = Hexadezimalcodierung ), dient zur Aufnahme des Betriebssystemcodes. Das Betriebssystem organisiert im wesentlichen die Steuerung des Prozessors, den Betrieb eventuell vorhandener weiterer Betriebsmittel der Datenverarbeitungsanlage und die Zugriffe auf den Speicher. Ein sich daran anschließender Anwenderspeicherbereich, dessen Adreßraum im dargestellten Beispiel bei der Startadresse 8000h ( h = Hexadezimalcodierung ) beginnt, dient zur Aufnahme der Anwendungsprogramm- und Anwendungsdatencodierungen von in der Regel verschiedenen Anwendern. Dieser Speicherbereich ist somit selbst in einzelne Subbereiche gegliedert. Im Beispiel der Figur sind zwei derartige Subbereiche dargestellt. Ein beispielsweise von den Adressen 8000h bis 8FFFh reichender Bereich ist einem Anwender A für die Aufnahme von Anwenderprogrammcode und Anwenderdatencode vorgesehen. Ein sich anschließender, von den Adressen 9000h bis 9FFFh reichender Bereich ist einem zweiten Anwender B ebenfalls für die Aufnahme von Anwenderprogrammcode und Anwenderdatencode vorgesehen. Ab der folgenden Startadresse A000h bis zum Ende des Speichers mit der Adresse FFFFh können sich weiteren Anwendern zugewiesene Subbereiche anschließen.

Im dargestellten Beispiel kann somit z.B. der Anwender A, dem der Anwenderspeicherbereich im Adreßraum von 8000h bis 8FFFh zugewiesen worden ist, aufgrund eines darin installierten Anwenderprogrammcodes nur auf Anwenderdaten zugreifen, deren Code ebenfalls in Zellen abgelegt ist, deren Adreßraum von der Startadresse 8000h bis zur Endadresse 8FFFh reicht. Dies wird erfindungsgemäß durch einen entsprechenden Eintrag in der mit "Anwendungsprogramm A" in der Speicherbereichszugrifftabelle bezeichneten Zelle des Betriebssystemspeicherbereiches gewährleistet. Im Beispiel der Figur ist dies durch eine mit S1 bezeichnete und mit durchgezogener Linie dargestellte, nach vorne gerichtete zulässige Programmverzweigung des Anwenderprogammcodes A innerhalb des eigenen Anwenderprogrammspeicherbereiches dargestellt. Alle anderen von diesem Anwenderprogrammspeicherbereich ausgehenden Programmverzweigungen, so eine in den Betriebssystemspeicherbereich reichende Verzweigung S5 bzw. eine in den benachbarten Anwenderprogrammspeicherbereich des Anwenders A mit der Bereichsbreite 9000h bis 9FFFh reichende Verzweigung S3 sind unzulässig und werden somit nicht ausgeführt. Diese sind in der Figur jeweils in gepunkteter Linie dargestellt.

In der gleichen Weise ist es mit dem vom einem weiteren Anwender B im Anwenderprogrammspeicherbereich von 9000h bis 9FFFh installierten Anwendungsprogrammcode nur möglich, lesende bzw. schreibende Zugriffe auf innerhalb des eigenen Anwenderprogrammspeicherbereiches liegende Speicherzellen auszuführen, so z.B. die rückwärts gerichtete Programmverzweigung S2. Ein von diesem Anwenderprogrammspeicherbereich ausgehender und auf den Speicherbereich des Anwenders A gerichteter Zugriff, in der Figur mit einer gepunkteten Linie S4 dargestellt, sind ebenfalls unzulässig und können erfindungsgemäß verhindert werden.

Vorteilhaft erfolgt die Anpassung des Prozessors bezüglich seines internen Mikrocodes derart, daß vor der Ausführung von Standardbefehlen des Prozessors, welche einen lesenden oder beschreibenden Zugriff auf den Inhalt von Speicherzellen anfordern, zunächst der zum jeweiligen Standardbefehl gehörige aktuelle Inhalt des Programmzählers des Prozessors überprüft wird. Dieser "zeigt" quasi auf die Herkunftsadresse des aktuell zur Ausführung anstehenden Befehl. Tritt der Fall auf, daß der Inhalt des Programmzählers auf die Adresse einer im Betriebssystemspeicherbereich liegenden Speicherzelle verweist, der Befehl also z.B. Bestandteil des Betriebssystems ist, so wird die Ausführung des Befehls freigegeben. In diesem Fall ist der Ursprung des Befehls somit nicht anwendersondern systembedingt. Tritt dagegen der Fall auf, daß der Inhalt des Programmzählers auf die Adresse einer im Anwenderspeicherbereich liegenden Speicherzelle verweist, so wird die Ausführung des Befehls gesperrt. In diesem Fall ist die Quelle des Befehls eindeutig anwenderbedingt.

Erfindungsgemäß wird die Ausführung derartiger Befehle auf dem Umweg über die im Betriebssystem des Prozessors vorhandene Programmroutine ermöglicht. Diese ist vorteilhaft derart gestaltet, daß zunächst der zum jeweiligen, einen lesenden oder beschreibenden Zugriff auf eine Speicherzelle anfordernde Befehl gehörige aktuelle Inhalt des Stapelspeichers des Prozessors überprüft wird. In diesem Stapelspeicher ist die Rücksprungadresse des Befehls enthalten, welche ebenfalls die "Herkunft" des zur Ausführung anstehenden Befehl widerspiegelt. Nun wird der zum Inhalt des Stapelspeichers gehörige Eintrag in der Speicherbereichs-Zugriffstabelle verglichen mit dem vom jeweiligen Befehl angeforderten Zugriff auf eine Speicherzelle. Tritt der Fall auf, daß der angeforderten Zugriff auf eine außerhalb des in der Speicherbereichs-Zugriffstabelle enthaltenen, zugelassenen Adreßraumes liegende Speicherzelle verweist, wird die Ausführung des Befehls gesperrt, andernfalls freigegeben.

Eine portable Chipkarte gemäß der Erfindung ist besonders für den mobilen Einsatz geeignet, da gerade hierbei vielfach eine parallel Benutzung durch mehrere Anwender notwendig ist. Jeder Anwender kann dabei die portable Chipkarte ungestört durch mögliche andere Anwender und ohne möglicherweise auch nur versehentliche Beeinträchtigungen der Programme und Daten der anderen Anwender nutzen. Insbesondere ist der Datenschutz der Anwender untereinander gesichert, und es werden unbefugte, möglicherweise auch unprofessionelle lesende und schreibende Eingriffe in das Betriebssystem aus einem in einem Anwenderprogrammspeicherbereich installierten Anwendungsprogrammcode heraus verhindert. Als portable Chipkarten gemäß der Erfindung sind besonders Prozessor-Chipkarten geeignet.

## Patentansprüche

1. Portable Chipkarte mit einem Prozessor und einem Speicher, welcher in einen Betriebssystemspeicherbereich und zumindest einen Anwenderspeicherbereich geteilt ist, wobei
a) der Prozessor bezüglich des internen Mikrocodes so angepaßt ist, daß die Ausführung von in einem Anwenderspeicherbereich geladenen Prozessorstandardbefehlen gesperrt ist, welche einen lesenden oder beschreibenden Zugriff auf den Inhalt von Speicherzellen anfordern,
b) im Betriebssystemspeicherbereich eine Speicherbereichs-Zugriffstabelle vorhanden ist, in welcher pro Anwenderspeicherbereich der zugelassene Adreßraum für die im jeweiligen Anwenderspeicherbereich geladenen Prozessorstandardbefehle hinterlegt ist, und
c) in dem Betriebssystem des Prozessors eine Programmroutine vorhanden ist, welche
c1) von einem in einem Anwenderspeicherbereich geladenen, einen lesenden oder beschreibenden Zugriff auf eine Speicherzelle anfordernden Prozessorstandardbefehl aufgerufen wird,
c2) mittels der Speicherbereichs-Zugriffstabelle überprüft, ob der vom jeweiligen Prozessorstandardbefehl angeforderte Zugriff auf eine Speicherzelle im zugelassenen Adreßraum liegt, und
c3) andernfalls die Ausführung des Prozessorstandardbefehls sperrt.

2. Vorrichtung nach Anspruch 1, wobei die Anpassung des Prozessors bezüglich des internen Mikrocodes derart erfolgt, daß
a) vor der Ausführung von Prozessorstandardbefehlen, welche einen lesenden oder beschreibenden Zugriff auf den Inhalt von Speicherzellen anfordern, der zum jeweiligen Prozessorstandardbefehl gehörige aktuelle Inhalt des Programmzählers des Prozessors überprüft wird,
b) für den Fall, daß der Inhalt des Programmzählers auf die Adresse einer im Betriebssystemspeicherbereich liegenden Speicherzelle verweist, die Ausführung des Prozessorstandardbefehls freigegeben, und
c) für den Fall, daß der Inhalt des Programmzählers auf die Adresse einer im Anwenderspeicherbereich liegenden Speicherzelle verweist, die Ausführung des Prozessorstandardbefehls gesperrt wird.

3. Vorrichtung nach Anspruch 1 oder 2, wobei die im Betriebssystem des Prozessors vorhandene Programmroutine derart gestaltet ist, daß
a) der zum jeweiligen, einen lesenden oder beschreibenden Zugriff auf eine Speicherzelle anfordernde Prozessorstandardbefehl gehörige aktuelle Inhalt des Stapelspeichers des Prozessors überprüft wird, und
b) der zum Inhalt des Stapelspeichers gehörige Eintrag in der Speicherbereichs-Zugriffstabelle verglichen wird mit dem vom jeweiligen Prozessorstandardbefehl angeforderten Zugriff auf eine Speicherzelle, und
c) für den Fall, daß der angeforderten Zugriff auf eine außerhalb des in der Speicherbereichs-Zugriffstabelle enthaltenen, zugelassenen Adreßraumes liegende Speicherzelle verweist, die Ausführung des Prozessorstandardbefehls gesperrt wird.

## Claims

1. Portable chip card having a processor and a memory, which is divided into an operating system memory area and at least one user memory area, in which card
a) the processor is adapted with respect to the internal microcode in such a way that the execution of processor standard commands which are loaded in a user memory area and request reading or writing access to the content of memory cells is inhibited,
b) in the operating system memory area there is a memory area access table, in which there is stored per user memory area the authorized address area for the processor standard commands loaded in the respective user memory area, and
c) in the operating system of the processor there is a program routine which
c1) is called up by a processor standard command loaded in a user memory area and requesting reading or writing access to a memory cell,
c2) checks by means of the memory area access table whether the access to a memory cell requested by the respective processor standard command lies in the authorized address area, and
c3) otherwise inhibits the execution of the processor standard command.

2. Device according to Claim 1, the adaptation of the processor with respect to the internal microcode being performed in such a way that
a) before the execution of the processor standard commands which request reading or writing access to the content of memory cells, the current content of the memory counter of the processor belonging to the respective processor standard command is checked,
b) in the event that the content of the program counter refers to the address of a memory cell lying in the operating system memory area, the execution of the processor standard command is enabled, and
c) in the event that the content of the program counter refers to the address of a memory cell lying in the user memory area, the execution of the processor standard command is inhibited.

3. Device according to Claim 1 or 2, the program routine present in the operating system of the processor being designed in such a way that
a) the current content of the stack of the processor belonging to the respective processor standard command requesting reading or writing access to a memory cell is checked, and
b) the entry belonging to the content of the stack in the memory area access table is compared with the access to a memory cell requested by the respective processor standard command, and
c) in the event that the requested access refers to a memory cell lying outside the authorized address area contained in the memory area access table, the execution of the processor standard command is inhibited.

## Revendications

1. Carte à puce portable comportant un processeur et une mémoire qui est subdivisée en une zone de mémoire de système d'exploitation et au moins une zone de mémoire d'utilisateur,
a) le processeur étant adapté en ce qui concerne le microcode interne de telle manière que soit bloquée la réalisation d'instructions normalisées de processeur, chargées dans une zone de mémoire d'utilisateur, qui exige un accès de lecture ou d'écriture au contenu de cellules de mémoire,
b) il est présent dans la zone de mémoire du système d'exploitation, une table d'accès aux zones de mémoire dans laquelle il est enregistré, par zone de mémoire d'utilisateur, la zone d'adresse autorisée pour les instructions normalisées de processeur chargées dans la zone de mémoire d'utilisateur associée, et
c) il est présent, dans le système d'exploitation du processeur, une routine de programme, qui
c1) est appelée par une instruction normalisée de processeur chargée dans une zone de mémoire d'utilisateur et exigeant un accès de lecture ou d'écriture à une cellule de mémoire,
c2) vérifie, au moyen de la table d'accès aux zones de mémoire, si l'accès à une cellule de mémoire, exigé par l'instruction normalisée de processeur associé, est dans la zone d'adresse autorisée, et
c3) bloque, dans la cas contraire, l'exécution de l'instruction normalisée de processeur.

2. Dispositif suivant la revendication 1, l'adaptation du processeur en ce qui concerne le microcode interne s'effectuant de telle manière que
a) il est vérifié, avant l'exécution d'instructions normalisées de processeur qui exigent un accès de lecture ou d'écriture au contenu de cellules de mémoire, le contenu du moment du compteur de programme du processeur faisant partie de l'instruction normalisée de processeur associé,
b) l'exécution de l'instruction normalisée de processeur est agréée dans le cas où le contenu du compteur de programmes renvoie à l'adresse d'une cellule de mémoire se trouvant dans la zone de mémoire du système d'exploitation, et
c) l'exécution de l'instruction normalisée de processeur est bloquée dans le cas où le contenu du compteur de programmes renvoie à l'adresse d'une cellule de mémoire se trouvant dans la zone de mémoire d'utilisateur.

3. Dispositif suivant la revendication 1 ou 2, la routine de programme présente dans le système d'exploitation du processeur étant configurée de telle manière que
a) le contenu du moment de la mémoire par lots du processeur faisant partie de l'instruction normalisée de processeur associé exigeant un accès de lecture ou d'écriture à une cellule de mémoire est vérifié, et
b) l'enregistrement dans la table d'accès aux zones de mémoire faisant partie du contenu de la mémoire par lots est comparé à l'accès à une cellule de mémoire exigé par l'instruction normalisée du processeur associé, et
c) l'exécution de l'instruction normalisée de processeur est bloquée dans le cas où l'accès exigé renvoie à une cellule de mémoire se trouvant à l'extérieur de la zone d'adresse autorisée contenue dans la table d'accès aux zones de mémoire.
